# EUROPEAN PATENT APPLICATION

(11) **EP 4 517 621 A1**
(43) Date of publication of application: **05.03.2025**
(21) Application number: 24190021.6
(22) Date of filing: 22.07.2024
(51) Int. Cl.: G06Q 10/10, G06F 3/00, G06F 40/10, G06F 3/048

(54) **INFORMATION PROCESSING APPARATUS, METHOD, COMPUTER PROGRAM, AND SYSTEM FOR CONTROLING THE STORAGE OF EDITABLE INFORMATION**

(30) Priority: 28.08.2023 JP 2023137759
(71) Applicant: Casio Computer Co., Ltd., Tokyo 151-8543 (JP)
(72) Inventor: Ito, Masahiro, Hamura-shi, Tokyo, 205-8555 (JP)
(74) Representative: Grünecker Patent- und Rechtsanwälte PartG mbB

(57) **Abstract**

An information processing server includes a control unit configured to: detect operations for an application programmed to display editable information; measure an elapsed time from a reference operation which is an operation serving as a reference among the detected operations; store the editable information updated by the operation performed during a predetermined time T from the reference operation; and transmit, to a communication device, status information (SD1 to SDS) indicating stages of processing of the storing of the editable information displayed on the application.

## Description

### TECHNICAL FIELD

The disclosure of the present specification relates to an information processing apparatus, an information processing method, a computer program, and an information processing system.

### BACKGROUND

In the field of school education, Information and Communication Technology (ICT) devices are attracting attention not only as tools for self-directed learning, as described in JP2004-264874A, but also as communication tools between teachers and students.

An example of a communication tool utilizing such an ICT device is a digital notebook. The digital notebook is managed on a server, and when a teacher or student operates his/her terminal to record various information into the digital notebook or edit a recorded content, the corresponding content is transmitted to the server.

The information recorded and edited in the digital notebook can be shared between teachers and students. For this reason, various communications that have traditionally been performed in the educational field, such as, for example, presenting assignments from teachers to students, submitting assignments from students to teachers, and returning grading results from teachers to students, can be electronically performed using digital notebooks.

### SUMMARY

In the above system, by notifying the server each time each user performs an operation on the digital notebook, the server can respond to user operations in a timely manner. However, if processing is performed to store the latest information on the digital notebook on the server at each user operation that is notified, an amount of communication between the terminal operated by each user and the server increases, and there occurs a concern that it is difficult to confirm the latest stored state on each user's terminal.

In view of the above-described situations, one aspect of the present disclosure improves visibility of a stage of storing processing of an application in response to an editing operation.

An information processing apparatus according to an aspect of the present disclosure includes a control unit configured to: detect operations for an application programmed to display editable information; measure an elapsed time from a reference operation, the reference operation serving as a reference among the detected operations; store the editable information updated by the operation performed during a predetermined time from the reference operation; and cause the application to display status information indicating a stage of a processing of the storing of the editable information displayed on the application.

An information processing method according to an aspect of the present disclosure causes an information processing apparatus to perform operations including the steps of: detecting operations for an application programmed to display editable information; measuring an elapsed time from a reference operation, the reference operation serving as a reference among the detected operations; storing the editable information updated by the operation performed during a predetermined time from the reference operation; and causing the application to display status information indicating a stage of a processing of the storing of the editable information displayed on the application.

A computer program according to an aspect of the present disclosure causes a computer to perform: detecting operations for an application programmed to display editable information; measuring an elapsed time from a reference operation, the reference operation serving as a reference among the detected operations; storing the editable information updated by the operation performed during a predetermined time from the reference operation; and causing the application to display status information indicating a stage of a processing of the storing of the editable information displayed on the application.

An information processing system according to an aspect of the present disclosure is an information processing system including a server apparatus and a communication device, in which a control unit of the communication device is configured to: detect operations for an application programmed to display editable information; measure an elapsed time from a reference operation, the reference operation serving as a reference among the detected operations; and transmit, to the server apparatus, the editable information updated by the operation performed during a predetermined time from the reference operation, in which a control unit of the server apparatus is configured to: receive the editable information transmitted from the communication device and store the received editable information into a predetermined storage unit; and transmit, to the communication device, a content of the application edited based on the editable information stored in the predetermined storage unit and status information indicating a stage of a process of the storing of the editable information displayed on the application, and in which the control unit of the communication device is further configured to: receive the edited content of the application and the status information; and cause a display unit to display the status information along with the content of the application.

According to the above illustrative aspects, it is possible to improve visibility of a stage of storing processing of an application in response to an editing operation.

### BRIEF DESCRIPTION OF THE SEVERAL VIEWS OF THE DRAWING

FIG. 1 is a diagram showing an overall configuration of an information processing system according to an illustrative embodiment of the present disclosure.
FIG. 2 is a block diagram showing a configuration of an electronic circuit of an information processing server according to an illustrative embodiment of the present disclosure.
FIG. 3 is a diagram showing a content of a sticky note management table stored in a sticky note management table data storage area of the information processing server according to the illustrative embodiment of present disclosure.
FIG. 4 is an example of a flow chart of operation monitoring processing performed by the information processing server according to the illustrative embodiment of the present disclosure.
FIG. 5 is an example of a flow chart of storing control processing performed by the information processing server according to the illustrative embodiment of the present disclosure.
FIG. 6 is a diagram illustrating a relationship between operation detection and storing processing in the information processing server according to the illustrative embodiment of the present disclosure.
FIG. 7 is an example of an application screen of the information processing system according to the illustrative embodiment of the present disclosure.
FIG. 8 is another example of the application screen of the information processing system according to the illustrative embodiment of the present disclosure.
FIG. 9 is still another example of the application screen of the information processing system according to the illustrative embodiment of the present disclosure.
FIG. 10 is yet another example of the application screen of the information processing system according to the illustrative embodiment of the present disclosure.
FIG. 11 is still yet another example of the application screen of the information processing system according to the illustrative embodiment of the present disclosure.
FIG. 12 is further another example of the application screen of the information processing system according to the illustrative embodiment of the present disclosure.
FIG. 13 is another example of a flow chart of the storing control processing performed by the information processing server according to the illustrative embodiment of the present disclosure.

### DETAILED DESCRIPTION

An information processing apparatus, an information processing method that is executed by the information processing apparatus, which is an example of a computer, and a program according to an illustrative embodiment of the present disclosure will be described in detail with reference to the drawings.

### {Configuration of Information Processing System 1}

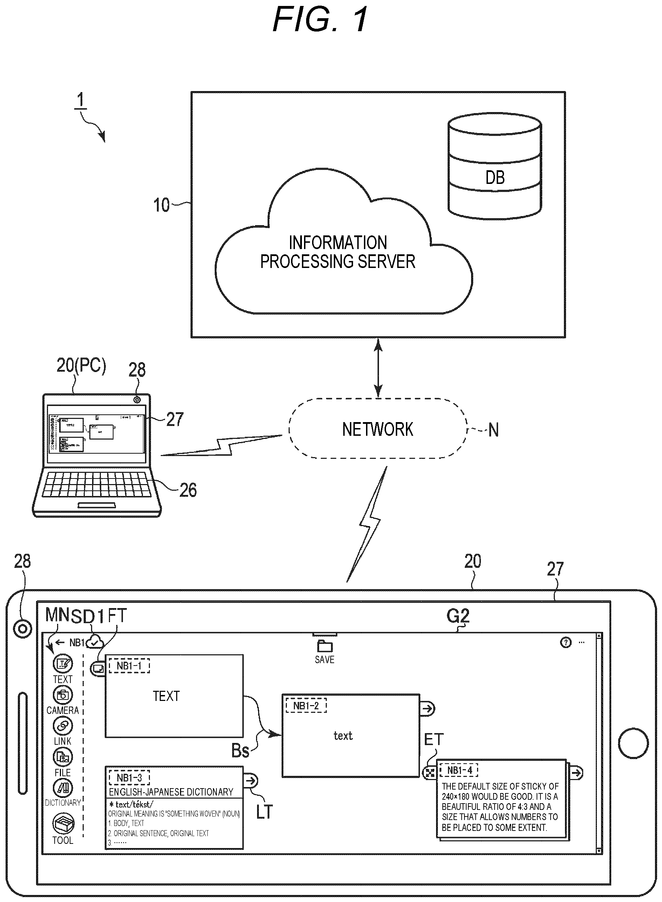

FIG. 1 is a diagram showing an overall configuration of an information processing system 1 according to an illustrative embodiment of the present disclosure.

The information processing system 1 includes an information processing server 10 (server apparatus) provided on a network N such as the Internet, and a user terminal 20 (communication device) communicatively connected to the information processing server 10.

The information processing server 10 is a dedicated server that connects an information processing server-using application for using the information processing server 10 and a cloud service.

Note that both the information processing server 10 and the user terminal 20 can be information processing apparatuses according to the present disclosure. Hereinafter, a case will be described in which the information processing server 10 executes a variety of processing, including creation, editing, and management of a digital notebook (hereinafter, simply referred to as a notebook), in response to user operations on the information processing server-using application of the user terminal 20. In another illustrative embodiment, the variety of processing, including creation, editing, and management of the notebook, may be performed on the user terminal 20.

The user terminal 20 is an example of a communication device and includes a CPU 21, a work memory 22, a program memory 23, a communication unit 24, an antenna 25, an operation key 26, and a display unit 27. Note that the operation key 26 includes a touch panel mounted on the display unit 27. The user terminal 20 is, for example, a tablet terminal with a communication function, a smart phone, a PC, an electronic dictionary, a mobile phone, an e-book, a portable game console, or the like.

Although FIG. 1 shows two user terminals 20 communicatively connected to the information processing server 10, more user terminals 20 may be communicatively connected to the information processing server 10. For example, a teacher and a student in school may each have one user terminal 20, and the plurality of user terminals 20 may be communicatively connected to the information processing server 10.

An information processing server-using application is installed in the program memory 23 of the user terminal 20. Hereinafter, a case where the information processing server-using application is a Web browser will be described as an example, but the information processing server-using application may be a dedicated application. The information processing server-using application is an example of an application that displays editable information and will hereinafter be referred to simply as an application.

### {Functions of Information Processing Server 10}

The information processing server 10 has at least the following functions (10a) to (10e) associated with the notebook in a state in which it is communicatively connected to the user terminal 20 via the communication unit 24 and antenna 25 of the user terminal 20. The information processing server 10 fulfills the above functions based on an operation for the application of the user terminal 20.

### {[Function (10a)]}

A function of creating a notebook screen G2 in response to an operation on the user terminal 20 and causing the display unit 27 of the user terminal 20 to display the created notebook screen G2. The notebook screen G2 is a display area where a user can input arbitrary information and cause the information to be displayed. Note that FIG. 1 shows a state in which a content of a notebook NB 1 is displayed.

### {[Function (10b)]}

A function of, in response to a user operation on a notebook menu MN provided on the notebook screen G2, creating an electronic sticky note NBm-n in which information of a type selected from the notebook menu MN has been input, and causing the created electronic sticky note NBm-n to be displayed at any user-desired location in the notebook NBm. For example, by selecting "Camera" from the notebook menu MN, an electronic sticky note containing an image captured by an imaging unit 28 of the user terminal 20 can be created. The symbols m and n represent natural numbers. Note that FIG. 1 shows a state in which four electronic sticky notes (electronic sticky notes NB 1-1, NB1-2, NB1-3, and NB 1-4) are displayed in the notebook NB 1.

### {[Function (10c)]}

A function of moving a [Line Connection] tab LT added to a right end of the electronic sticky note NBm-n to another electronic sticky note in the notebook NBm in response to a user operation, and connecting (line-connecting) and organizing the electronic sticky notes in sequence in a row by a connection arrow Bs of a predetermined color (for example, blue). Note that FIG. 1 shows a state in which the electronic sticky note NB 1-1 and the electronic sticky note NB1-2 are connected, and when playback of a slide show is instructed for the connected electronic sticky notes, contents of the connected electronic sticky notes are sequentially played back in a slide show manner along a direction of the connection arrow.

### {[Function (10d)]}

A function of, in response to a user operation on a [Folding] tab FT added to a left end of the forefront electronic sticky note NB 1-1 among a plurality of electronic sticky notes connected (line-connected) and organized in sequence in a row, switching a display from an expanded state so that the forefront electronic sticky note is folded up and the second and subsequent electronic sticky notes are folded down to fit within a predetermined range. Note that FIG. 1 shows a state in which a plurality of electronic sticky notes, with the electronic sticky note NB 1-1 at the head, are folded.

### {[Function (10e)]}

A function of, in response to a user operation on an [Expansion] tab ET added to the left end of the forefront electronic sticky note among a plurality of electronic sticky notes displayed with being folded, expanding and displaying the plurality of electronic sticky notes to their original form.

Note that, in the present illustrative embodiment, the symbol NBm (NB1, NB2, and the like) represents a notebook ID (identification information). The symbol NBm may be read interchangeably as a notebook name input by a user. In addition, the symbol NBm-n (NB 1-1, NB1-2, and the like) is an ID of an electronic sticky note created in the notebook NBm and represents an electronic sticky note ID. The symbol NBm-n may be read interchangeably as an electronic sticky note name input by a user.

Specifically, the notebook name may be, for example, a subject name of a subject that a user is studying, and the electronic sticky note name may be, for example, a unit name within the subject or a study date and time.

### {Electronic Circuit of Information Processing Server 10}

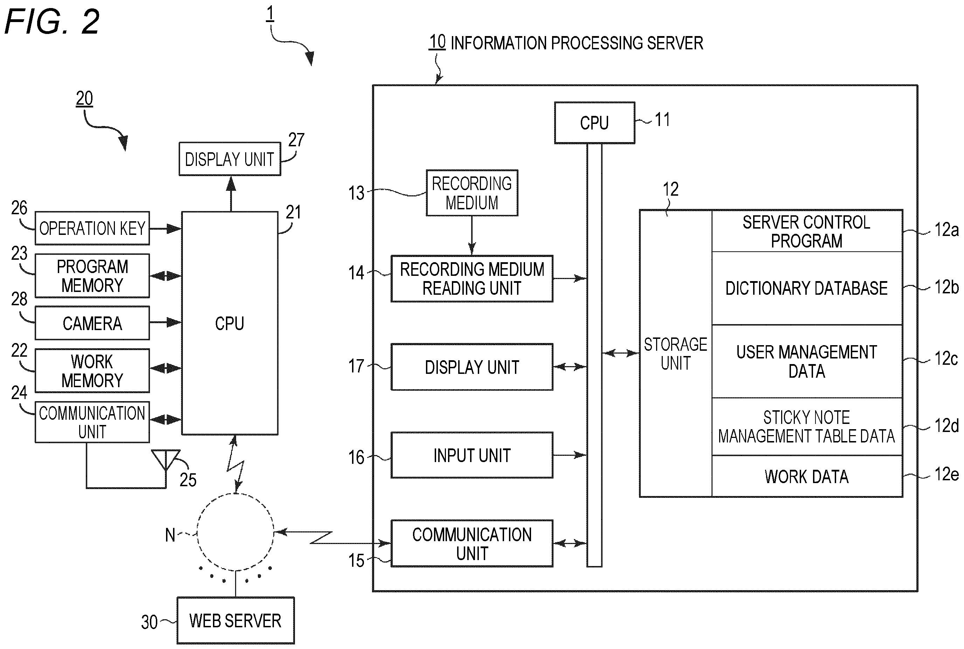

FIG. 2 is a block diagram showing a configuration of an electronic circuit of the information processing server 10.

The electronic circuit of the information processing server 10 includes a control unit (CPU: Central Processing Unit) 11, which includes at least one processor, a storage unit 12, a recording medium reading unit 14, a communication unit 15, an input unit 16, and a display unit 17.

The control unit 11 controls an operation of each circuit unit in accordance with a server control program 12a stored in the storage unit 12, in response to an input signal corresponding to a user operation on the input unit 16 or a signal received via the communication unit 24 and antenna 25 of the user terminal 20 on the network N and the communication unit 15 of the information processing server 10.

The server control program 12a may be stored in advance in the storage unit 12, may be read and stored in the storage unit 12 from an external recording medium 13 such as a CD-ROM via the recording medium reading unit 14, or may be downloaded from a Web server (in this case, program server) 30 on the network N and read and stored in the storage unit 12.

The server control program 12a includes a program for executing the above functions (10a) to (10e). Additionally, the server control program also includes a program for executing operation monitoring processing and storing control processing, which will be described below.

In the storage unit 12, in addition to a storage area for the server control program 12a, a dictionary database storage area 12b, a user management data storage area 12c, a sticky note management table data storage area 12d, and a work data storage area 12e are secured.

In the dictionary database storage area 12b, various dictionary data such as an English-Japanese dictionary, a German-Japanese dictionary, a French-Japanese dictionary, and a Japanese dictionary is stored as dictionary data in which words that are headwords are associated with explanatory information such as translations, word meanings, example sentences, and commentaries corresponding to the headwords.

In the user management data storage area 12c, for each user (user ID (account)) of the user terminal 20 in which the information processing server-using application is installed, a password registered by the user, a user attribute (occupation (school), grade, and the like), and data (notebook data) of a content of the notebook NBm are stored in association with one another. The notebook data is data including a content of the electronic sticky note NBm-n created in response to a user operation, and is associated with the notebook ID and the electronic sticky note ID.

In the user management data storage area 12c, an ID of available dictionary data (dictionary content) is additionally stored for each user (user ID (account)) of the user terminal 20.

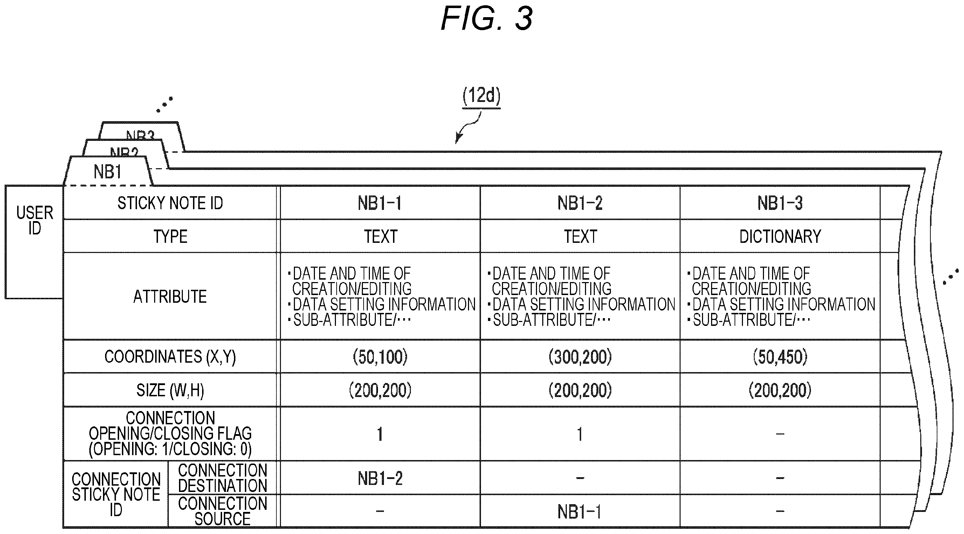

FIG. 3 is a diagram showing a content of a sticky note management table (notebook management table) 12d stored in the sticky note management table data storage area 12d of the information processing server 10.

In the sticky note management table (notebook management table) 12d, for each user ID stored (registered) in the user management data storage area 12c, an electronic sticky note ID of the electronic sticky note NBm-n included in the notebook NBm, a type of information selected from the notebook menu MN, an attribute of data included in the electronic sticky note NBm-n (date and time of creation/editing, data setting information such as data format, sub-attribute, and the like), coordinates indicating a display position of the electronic sticky note NBm-n on the notebook NBm, a display size of the electronic sticky note NBm-n, a connection opening /closing flag, and a connection sticky note ID are stored in association with the notebook ID of the notebook NBm. The connection opening/closing flag indicates whether to expand and display or to fold and display an electronic sticky note line-connected to another electronic sticky note. The connection sticky note ID indicates electronic sticky note IDs of a connection destination and a connection source.

The sticky note management table (notebook management table) 12d stores management information on the plurality of electronic sticky notes (NB1-n, NB2-n, NBm-n) included in each of the plurality of notebooks (NB 1, NB2, ...). The sticky note management table data storage area 12d is also a management table for the notebook NBm that allows the stored management information to be updated as the notebook NBm and the electronic sticky note NBm-n contained in the notebook NBm are created and information is updated.

In the work data storage area 12e, various data that is generated or obtained in response to control of an operation of each unit by the control unit 11 is temporarily stored as needed.

In the information processing server 10 configured as described above, the control unit 11 controls the operation of each circuit unit in accordance with commands described in the server control program 12a, and the software and the hardware operate in cooperation, thereby executing operation monitoring processing and storing control processing, which will be described below. As a result, for example, services as shown in the functions (a) to (e) described above can be stably provided to users.

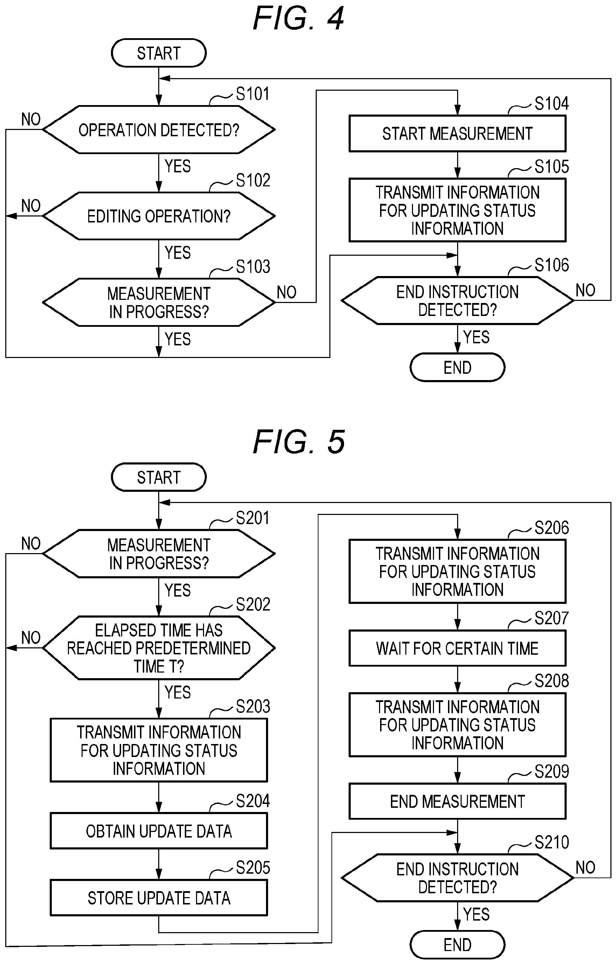

FIG. 4 is an example of a flow chart of operation monitoring processing performed by the information processing server according to the illustrative embodiment of the present disclosure. FIG. 5 is an example of a flow chart of storing control processing performed by the information processing server according to the illustrative embodiment of the present disclosure. Hereinafter, operation monitoring processing and storing control processing performed by the information processing server will be described with reference to FIGS. 4 and 5.

In the operation monitoring processing shown in FIG. 4, the control unit 11 of the information processing server 10 first performs operation detection processing of determining whether a predetermined operation has been detected for the application being executed by the user terminal 20 via an input unit (operation key 26) (step S101). Here, based on the notification to the information processing server 10 performed by the user terminal 20 in response to an operation for the application, the control unit 11 determines whether an operation for the application has been detected.

Note that the notification from the user terminal 20 to the information processing server 10 is preferably a notification that makes it possible to grasp whether the notified operation is an editing operation accompanying update of information, but does not need to include the updated information itself. The notification from the user terminal 20 to the information processing server 10 may include, for example, information identifying which form the operation is for.

If it is determined in step S101 that no operation is detected (step S101: NO), the control unit 11 returns to the operation detection processing of step S101 and repeats the operation monitoring processing shown in FIG. 4, unless an end instruction is detected (step S106: NO).

If it is determined in step S101 that an operation has been detected (step S101: YES), the control unit 11 determines whether the detected operation is an editing operation (step S102). Here, the control unit 11 may make a determination based on information included in the notification from the user terminal 20, and for example, may make a determination based on information about a form related to the notification.

If it is determined in step S102 that the operation is not an editing operation (step S102: NO), the control unit 11 returns to the operation detection processing of step S101 and repeats the operation monitoring processing shown in FIG. 4, unless an end instruction is detected (step S106: NO).

If it is determined in step S102 that the operation is an editing operation (step S102: YES), the control unit 11 determines whether an elapsed time from a reference operation for the current application is being measured (step S103). Note that the reference operation will be described below.

If it is determined in step S103 that measurement is in progress (step S103: YES), the control unit 11 does not perform measurement of a new elapsed time accompanying the determination that this editing operation has been performed, and returns to the operation detection processing of step S101 and repeats the operation monitoring processing shown in FIG. 4 unless an end instruction is detected (step S106: NO).

If it is determined in step S103 that measurement is not in progress (step S103: NO), the control unit 11 starts measuring an elapsed time from a timing at which the operation was detected in step S101 (step S104). That is, an example of a reference operation that serves as a reference for the elapsed time is an editing operation performed while the elapsed time is not being measured among the operations detected in step S101. Note that, as described below with reference to FIG. 5, the measurement of elapsed time ends when data storing processing is completed. Taking this into account, it can be said that the reference operation is an operation on editable information, which is first detected after storing processing of editable information.

Thereafter, the control unit 11 transmits, to the user terminal 20, information for updating status information on the application screen displayed on the user terminal 20 from a first display to a second display (step S105) so that the user can perceive that the information on the application screen is information edited and not stored yet in the information processing server 10. The control unit 11 executes processing of causing the application running on the user terminal 20 to display status information indicating a stage of a stored state of the editable information displayed on the application. In step S105, the control unit 11 transmits information for updating the status information from a first display indicating a stage in which the editable information displayed on the application is stored, that is, a stage of storing completion to a second display indicating a stage in which the editable information displayed on the application is not stored.

Note that status information SD1 displayed on the notebook screen G2 shown in FIG. 1 is an example of the first display and indicates that storing the notebook NB1 shown in FIG. 1 has been completed.

When the completion of update of the status information on the application is notified from the user terminal 20, the control unit 11 determines whether an end instruction has been detected (step S106). If it is determined that an end instruction has not been detected (step S106: NO), the control unit 11 returns to the operation detection processing of step S101 and repeats the operation monitoring processing shown in FIG. 4.

The storing control processing shown in FIG. 5 is executed in parallel in time with the operation monitoring processing shown in FIG. 4 on the information processing server 10. In the storing control processing shown in FIG. 5, the control unit 11 first determines whether an elapsed time from the reference operation for the application is being measured (step S201). Note that the processing of step S201 is similar to the processing of step S103 in FIG. 4.

If it is determined in step S201 that measurement is not in progress (step S201: NO), the control unit 11 returns to the processing of step S201 and repeats the storing control processing shown in FIG. 5 unless an end instruction is detected (step S210: NO).

If it is determined in step S201 that measurement is in progress (step S201: YES), the control unit 11 determines whether the elapsed time being measured has reached a predetermined time (step S202). The predetermined time is a time (parameter) for adjusting a frequency of the storing processing on the server 10 of the above-described edited content and maintaining an appropriate amount of communication between the client and the server. The predetermined time may be a time that can be arbitrarily set by the user, or may be a fixed time determined in advance. Additionally, the predetermined time may be dynamically set based on communication situations on the network N.

If it is determined in step S202 that the elapsed time has not reached the predetermined time (step S202: NO), the control unit 11 returns to the processing of step S201 and repeats the storing control processing shown in FIG. 5 unless an end instruction is detected (step S210: NO).

If it is determined in step S202 that the elapsed time has reached the predetermined time (step S202: YES), the control unit 11 performs storing processing of update data (step S203 to step S205).

In the storing processing, the control unit 11 first transmits, to the user terminal 20, information for updating the status information on the application screen from a second display to a third display (step S203) so that the user can perceive that the storing processing has been started on the server 10. More specifically, the control unit 11 transmits, to the user terminal 20, information for updating the status information from a second display indicating a stage in which a time less than the predetermined time has elapsed after the reference operation without the editable information displayed on the application being stored to a third display indicating a stage in which processing of storing the editable information displayed on the application is being executed.

Then, the control unit 11 obtains, as update data, the editable information updated by the operation performed during the predetermined time after the reference operation from the user terminal 20 (step S204), and stores the update data (step S205).

In step S204, the control unit 11 collectively obtains the latest information on the editable information updated by the operation performed during the predetermined time, as update data. For this reason, the number of communications itself for obtaining the editable information can be reduced, and the overhead arising from communications can also be suppressed.

In step S205, the control unit 11 updates, for example, the notebook data stored in the user management data storage area 12c based on the updated editable information. Additionally, the control unit 11 may update the management information on the notebook or electronic sticky note stored in the sticky note management table data storage area 12d.

When the storing processing is completed, the control unit 11 transmits, to the user terminal 20, information for updating the status information on the application screen from the third display to a fourth display (step S206) so that the user can perceive that the storing processing has been completed. More specifically, the control unit 11 transmits, to the user terminal 20, information for updating the status information from the third display indicating a stage in which processing of storing the editable information displayed on the application is being executed to a fourth display indicating a stage in which processing of storing the editable information displayed on the application has just completed.

Upon receiving a notification to the effect that the display has been updated from the user terminal 20, the control unit 11 waits for a certain time (step S207). Note that the certain time in step S207 may be a time sufficient for the user to confirm the fourth display, and for example, is several seconds.

Then, the control unit 11 transmits, to the user terminal 20, information for updating the status information on the application screen from the fourth display to a fifth display (step S208) so that the user can perceive that the storing of the information on the application screen on the information processing server 10 has completed. More specifically, the control unit 11 transmits, to the user terminal 20, information for updating the status information from the fourth display indicating a stage in which processing of storing the editable information displayed on the application has just completed to the first display indicating a stage in which the editable information displayed on the application is stored, that is, a stage of storing completion.

When the status information is updated to the first display, the control unit 11 ends the measurement of elapsed time (step S209).

When the measurement is ended, the control unit 11 determines whether an end instruction has been detected (step S210). If it is determined that an end instruction has not been detected (step S210: NO), the control unit 11 returns to the processing of step S201 and repeats the storing control processing shown in FIG. 5.

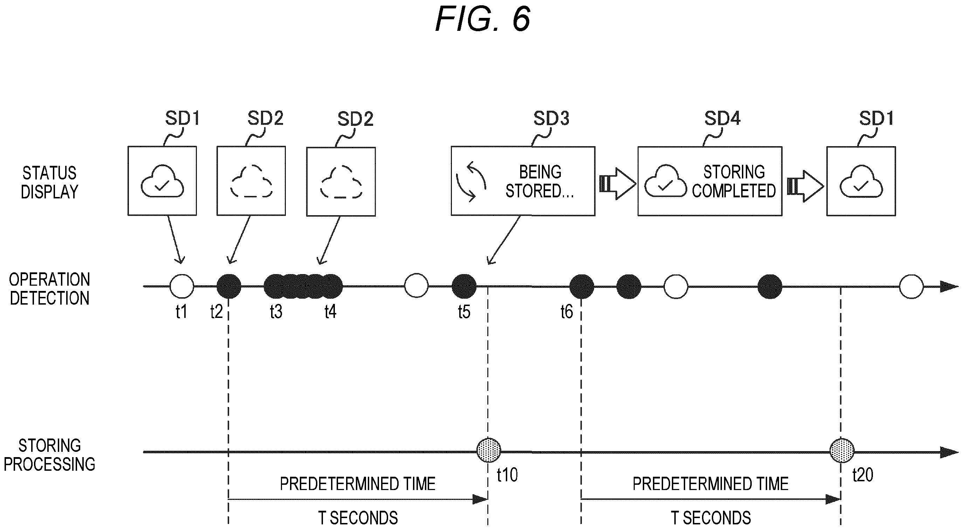

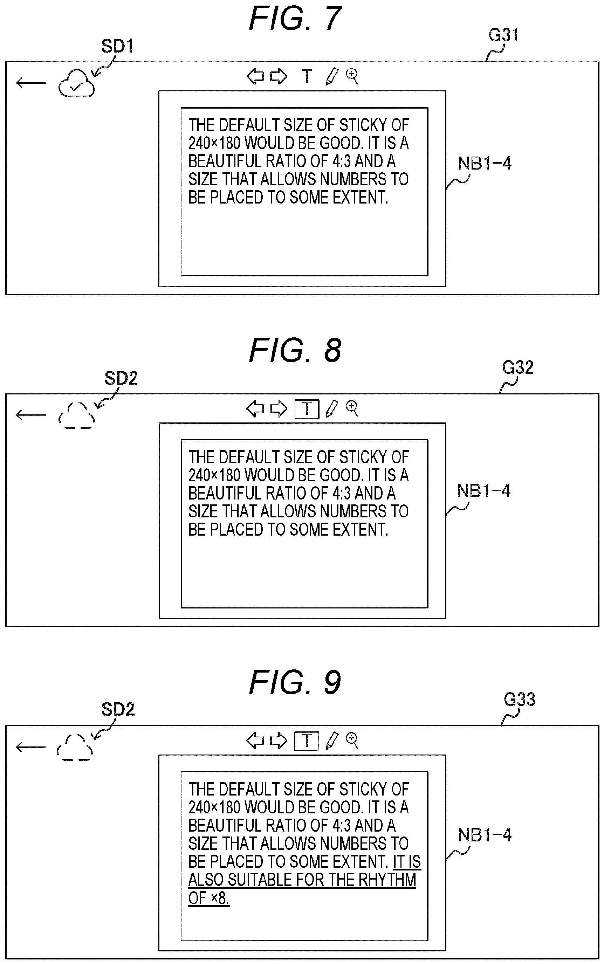

FIG. 6 is a diagram illustrating a relationship between operation detection and storing processing in the information processing server according to the illustrative embodiment of the present disclosure. FIGS. 7 to 12 are examples of the application screen displayed on the display unit 27 of the user terminal 20 in the information processing system according to an illustrative embodiment of the present disclosure, respectively. Hereinafter, referring to FIGS. 6 to 12, an aspect in which the status information changes on the application screen will be described in detail, taking a case where an editing operation is performed on an electronic sticky note, as an example.

At time t1 shown in FIG. 6, when the user instructs a detailed display of the electronic sticky note NB 1-4 on the notebook screen G2 of the user terminal 20 shown in FIG. 1, the user terminal 20 detects the instruction and notifies the server 10. Then, the control unit 11 of the server 10 transmits data for causing a sticky note screen to be displayed on the user terminal 20, and the user terminal 20 receives the data and causes a sticky note screen G31 shown in FIG. 7 to be displayed on the user terminal 20. At this time, in the operation monitoring process shown in FIG. 4, the display instruction is detected in step S101, but since the operation thereof is not an editing operation for the electronic sticky note NB1-4, it is determined in step S102 that the operation is not an editing operation. For this reason, at time 11, the information for updating the status information is not transmitted to the user terminal 20, and the status information SD1 on the screen G31 shown in FIG. 7 does not change from the status information SD1 on the notebook screen G2 shown in FIG. 1. Note that the status information SD1 is an example of the first display.

Then, at time t2 shown in FIG. 6, when the user operates the user terminal 20, and accordingly the user terminal 20 detects that a new text has been additionally input to the existing text in the electronic sticky note NB 1-4, the user terminal 20 notifies the same to the server 10. Then, the control unit 11 transmits data for causing a sticky note screen to be displayed on the user terminal 20, and the user terminal 20 receives the data and causes a sticky note screen G32 shown in FIG. 8 to be displayed on the user terminal 20. At this time, in the operation monitoring processing shown in FIG. 4, after the operation is detected in step S101, it is determined in step S102 that the operation is an editing operation, and the reference operation was not detected before the editing operation. Therefore, it is determined in step S103 that the measurement of elapsed time is not in progress. Accordingly, the measurement of elapsed time is started in step S104, and information for updating the status information to status information SD2 shown in FIG. 8 is transmitted in step S105. The status information SD2 displayed on the user terminal 20 that has received the information is a mark as an example of the second display in which a cloud mark is indicated by a broken line.

From time t3 to time t4 shown in FIG. 6, when the user operates the user terminal, and accordingly the user terminal 20 continues to detect additional input of a text to the existing text in the electronic sticky note NB 1-4, the sticky note screen is updated, and a sticky note screen G33 shown in FIG. 9 is displayed on the user terminal 20. Note that the measurement starts from time t2, and the elapsed time from time t2 to time t3 and time t4 has not reached the predetermined time (T seconds). Therefore, in the operation monitoring processing shown in FIG. 4, after the operation is detected in step S101, it is determined in step S102 that the operation is an editing operation, and it is determined in step S103 that the elapsed time is being measured. Additionally, also in the storing control processing shown in FIG. 5, it is determined in step S201 that the elapsed time is being measured, and it is determined in subsequent step S202 that the predetermined time (T seconds) has not elapsed. For this reason, from time t3 to time t4, the control unit 11 does not transmit the information for updating the status information, and accordingly, the status information SD2 on the sticky note screen G33 shown in FIG. 9 does not change from the status information SD2 on the sticky note screen G32 shown in FIG. 8.

Even after that, until the elapsed time from time t2 reaches the predetermined time (T seconds), the status information displayed on the application screen does not change from the status information SD2 even when new information is input. For example, at time t5 before the predetermined time T elapses, an editing operation in which the user inserts a mark into the electronic sticky note NB1-4 with a marker is detected, and the application screen is accordingly updated, but the user terminal 20 does not transmit the updated content to the information processing server 10, and the information processing server 10 also does not transmit the information for updating the status information to the user terminal 20.

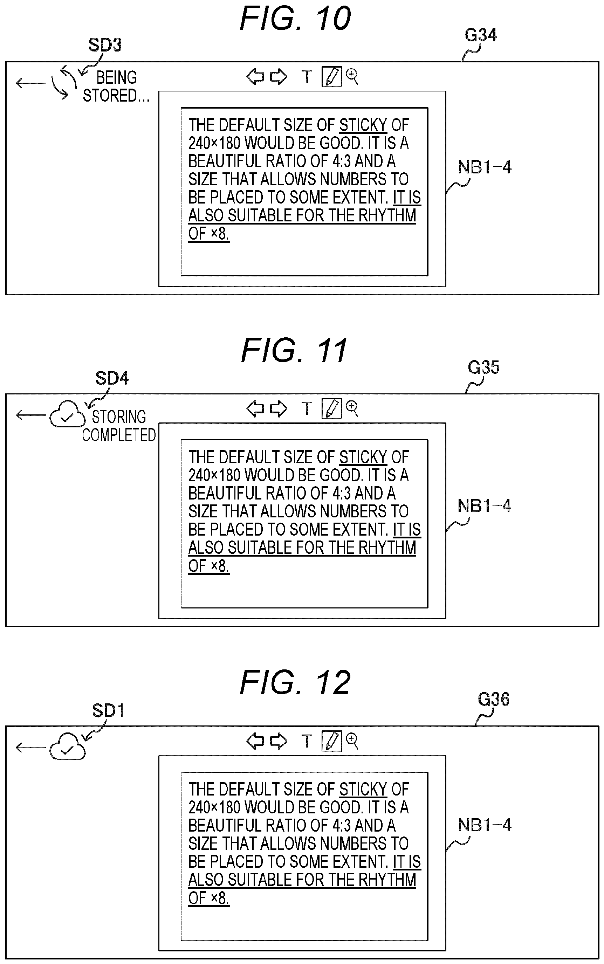

When it is detected that the elapsed time (elapsed time from time t2) at time t10 shown in FIG. 6 has reached the predetermined time (T seconds), the control unit 11 transmits information for updating the sticky note screen regardless of whether a user operation is detected. Along with this, a sticky note screen G34 shown in FIG. 10 is displayed on the user terminal 20. At this time, in the storing control processing shown in FIG. 5, after it is determined in step S201 that the measurement is in progress, it is determined in step S202 that the elapsed time has reached the predetermined time. Accordingly, the information for updating the status information is transmitted in step S203, and as a result, the status information on the user terminal 20 is updated from the status information SD2 shown in FIG. 9 to the status information SD3 shown in FIG. 10. Then, the update data is obtained from the user terminal 20 in step S204, and the update data is stored in step S205.

When the storing is completed, the sticky note screen is updated, and a sticky note screen G35 shown in FIG. 11 is transmitted to the user terminal 20. At this time, in the storing control processing shown in FIG. 5, the information for updating the status information is transmitted in step S206 following the data storing in step S205, and as a result, the status information on the user terminal 20 is updated from the status information SD3 shown in FIG. 10 to status information SD4 shown in FIG. 11.

Additionally, when a certain time elapses, the sticky note screen is updated, and a sticky note screen G36 shown in FIG. 12 is transmitted to the user terminal 20. At this time, in the storing control processing shown in FIG. 5, the information for updating the status information is transmitted in step S208, and as a result, an attention-calling character string "storing completed" included in the status information SD4 on the user terminal 20 disappears, and the status information is updated from the status information SD4 shown in FIG. 11 to the status information SD1 shown in FIG. 12.

As described above, in the information processing system 1, the information processing server 10 is configured to detect operations for the application, to measure the elapsed time from the reference operation among the detected operations, and when the elapsed time reaches a predetermined time, to store the editable information updated by the operation performed during the predetermined time from the reference operation.

Accordingly, in the information processing server 10, since the content updated by the operation performed within the predetermined time from the reference operation is integrated and stored, update processing with less influence of the communication environment can be implemented. Additionally, it is possible to provide stable services to users while suppressing the risk of data loss accompanying deterioration of the communication environment. Therefore, compared to a case where the updated content is stored each time an operation is performed, it is less susceptible to the influence of the communication environment, and user usability is improved. Additionally, the risk of data being lost because the user does not store the updated content can be suppressed. In other words, the interaction process between the user and the information processing server 10 can reliably assist the user in performing a technical task, such as saving edits.

Additionally, in the information processing system 1, the information processing server 10 is configured to cause the application to display the status information indicating a stage of the storing processing of the editable information displayed on the application.

For this reason, in the information processing server 10, visibility can be improved regarding whether the editing operation of the display information and the update processing of the display information based on the editing operation have been performed. Accordingly, the user can grasp whether the display information is being edited, the edited content is being saved, or the storing has been completed. In other words, the user can grasp the technical status of the device, thereby improving usability.

Additionally, in the information processing system 1, the reference operation that causes the information processing server 10 to start measurement is an operation for the editable information detected first after processing of storing the editable information, that is, an editing operation.

For this reason, in the information processing server 10, if no editing operation is performed, the measurement of elapsed time is not started. As a result, the processing of transmitting the latest editable information from the user terminal 20 to the information processing server 10 is not performed, which can suppress communication between the client and the server. Additionally, by starting the measurement with the first editing operation serving as a trigger after the storing processing and then storing the updated contents so far, it is possible to perform the storing processing at an appropriate timing while reliably preventing storing leakage. Therefore, it is possible to contribute to user comfort by suppressing unnecessary communication, and to securely perform data storing when an editing operation has been performed, thereby suppressing the user's risk of data loss.

Additionally, in the information processing system 1, the information processing server 10 causes the application to display the status information that is different from each other in a stage in which the editable information displayed on the application is stored, a stage in which a time less than the predetermined time has elapsed after the reference operation without the editable information displayed on the application being stored, and a stage in which the processing of storing the editable information displayed on the application is being performed.

For this reason, the information processing server 10 can allow the user to distinguish not only whether the editable information has been stored or not, but also, if not stored, whether it is before or during the storing processing. Therefore, according to the information processing server 10, the user can more finely recognize the managed state of the editable information, and the sense of security regarding the service can be further increased.

Note that the above-described processing performed by the information processing server 10 is not particularly limited, but is particularly advantageous in educational fields such as schools where many users are expected to use the processing simultaneously through the same access point. By avoiding an occurrence of communication errors and adverse effects on operability due to operation delays, a more comfortable educational environment can be provided.

The illustrative embodiment described above shows a specific example in order to easily understand the invention, and the present disclosure is not limited to the illustrative embodiment described above and should be understood to include a variety of modifications and alternations of the illustrative embodiment described above. For example, it would be understood that the illustrative embodiment described above can be embodied by modifying its components without departing from its concept. In addition, it would be understood that various illustrative embodiments can be implemented by appropriately combining multiple components disclosed in the illustrative embodiment described above. Further, one skilled in the art would understand that various illustrative embodiments can be implemented by omitting some components from all the components shown in the illustrative embodiment or by adding some components to those shown in the illustrative embodiment. That is, the information processing program, information processing method, and information processing apparatus described above can be variously modified and changed without departing from the scope of the claims.

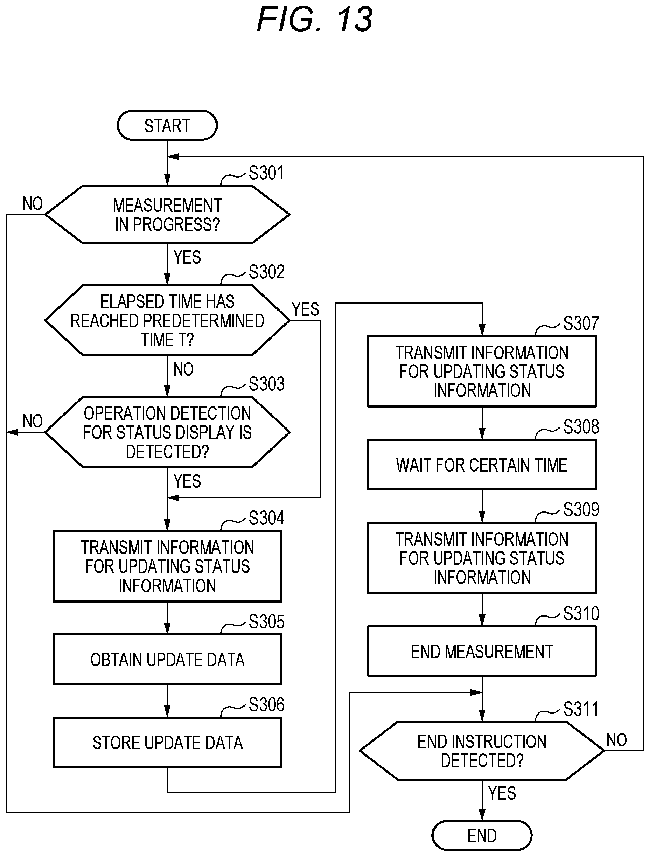

FIG. 13 is another example of a flow chart of the storing control processing performed by the information processing server according to the illustrative embodiment of the present disclosure. In the information processing system 1, the information processing server 10 may perform the storing control processing shown in FIG. 13 instead of the storing control processing shown in FIG. 5.

The storing control processing shown in FIG. 13 differs from the storing control processing shown in FIG. 5 in that when an explicit instruction is input from the user, updated data is stored even before a predetermined time has elapsed from the start of measurement. The other points are similar to the storing control processing shown in FIG. 5.

Specifically, in the storing control processing shown in FIG. 13, when it is determined in step S302 that the elapsed time has not reached the predetermined time, the control unit 11 further determines whether it is detected that the user has performed an operation (for example, a long-pressed tap or a double-click) for the status information on the application screen (in this case, the status information SD2, the cloud mark indicated by a broken line). Then, when it is determined that the operation has been detected, the control unit 11 executes storing processing (step S304 to step S306) in the same manner as when the elapsed time reaches the predetermined time.

In this way, by executing the storing processing with the operation (for example, pressing) for the status information serving as a trigger, it is possible to cope with even a case where the user wishes to store the data before the predetermined time elapses.

## Claims

1. An information processing apparatus comprising:
a control unit configured to:
detect operations for an application programmed to display editable information;
measure an elapsed time from a reference operation, the reference operation serving as a reference among the detected operations;
store the editable information updated by the operation performed during a predetermined time from the reference operation; and
cause the application to display status information indicating a stage of a processing of the storing of the editable information displayed on the application.

2. The information processing apparatus according to claim 1, wherein the reference operation is an operation for the editable information detected first after the storing of the editable information.

3. The information processing apparatus according to claim 1 or 2, wherein the stage of the processing of the storing comprises:
a stage in which the editable information displayed on the application is stored;
a stage in which a time less than the predetermined time has elapsed after the reference operation without the editable information being stored; and
a stage in which the storing processing is being performed.

4. An information processing method for causing an information processing apparatus to perform operations comprising the steps of:
detecting operations for an application programmed to display editable information;
measuring an elapsed time from a reference operation, the reference operation serving as a reference among the detected operations;
storing the editable information updated by the operation performed during a predetermined time from the reference operation; and
causing the application to display status information indicating a stage of a processing of the storing of the editable information displayed on the application.

5. A computer program for causing a computer to perform:
detecting operations for an application programmed to display editable information;
measuring an elapsed time from a reference operation, the reference operation serving as a reference among the detected operations;
storing the editable information updated by the operation performed during a predetermined time from the reference operation; and
causing the application to display status information indicating a stage of a processing of the storing of the editable information displayed on the application.

6. An information processing system comprising a server apparatus and a communication device,
wherein the communication device comprises a control unit configured to:
detect operations for an application programmed to display editable information;
measure an elapsed time from a reference operation, the reference operation serving as a reference among the detected operations; and
transmit, to the server apparatus, the editable information updated by the operation performed during a predetermined time from the reference operation,
wherein the server apparatus comprises a control unit configured to:
receive the editable information transmitted from the communication device and store the received editable information into a predetermined storage unit; and
transmit, to the communication device, a content of the application edited based on the editable information stored in the predetermined storage unit and status information indicating a stage of a process of the storing of the editable information displayed on the application, and
wherein the control unit of the communication device is further configured to:
receive the edited content of the application and the status information; and
cause a display unit to display the status information along with the content of the application.
